# EUROPEAN PATENT APPLICATION

(11) **EP 4 693 858 A1**
(43) Date of publication of application: **11.02.2026**
(21) Application number: 24823590.5
(22) Date of filing: 17.05.2024
(51) Int. Cl.: H02M 1/00, H02M 1/42, H02M 7/17

(54) **ELECTRONIC DEVICE COMPRISING PFC CIRCUIT, AND CONTROL METHOD THEREOF**

(30) Priority: 15.06.2023 KR 20230077117
(71) Applicant: Samsung Electronics Co., Ltd., Suwon-si, Gyeonggi-do 16677 (KR)
(72) Inventor: JOO, Sungyong, Suwon-si, Gyeonggi-do 16677 (KR); KO, Jaehyun, Suwon-si, Gyeonggi-do 16677 (KR); JUNG, Sungbum, Suwon-si, Gyeonggi-do 16677 (KR)
(74) Representative: Appleyard Lees IP LLP
(86) International application number: PCT/KR2024/006723
(87) International publication number: WO 2024/258069

(57) **Abstract**

An electronic apparatus is disclosed. The electronic apparatus may include: a first PFC circuit; a second PFC circuit that is connected in parallel to the first PFC circuit; and a control circuit that controls the first PFC circuit by detecting whether a load is connected and applying a first signal for controlling on-off of the first PFC circuit to a first switch in the first PFC circuit, and controls the second PFC circuit by applying a second signal for controlling on-off of the second PFC circuit to a second switch in the second PFC circuit.

## Description

### [Technical Field

Certain example embodiments may relate to an electronic apparatus and a control method thereof, and for example, to an electronic for controlling a burst mode of a power factor correction (PFC) circuit, and a control method thereof.

### [Background Art]

Various types of electronic apparatuses have been developed and distributed. Recently, for an aesthetic purpose or the like, a slim display device designed and a display device for outputting an image on a large screen, have been developed and distributed.

It has been difficult for the electronic apparatus to achieve a slim design and satisfy a standby power standard (or regulation) while still outputting a large amount of power.

For example, a conventional electronic apparatus that includes a plurality of PFC circuits to output a large amount of power fails to satisfy the standby power standard due to a switching signal (or a switching current) if each of the plurality of PFC circuits is operated in a burst mode.

There has been a demand for an electronic apparatus satisfying the standby power regulation if operated in a standby mode and capable of outputting a large amount of power if operated in a normal mode.

### [Disclosure of Invention]

### [Solution to Problem]

According to an an example embodiment, there may be provided an electronic apparatus which may comprise: a first power factor correction (PFC) circuit; a second PFC circuit connected in parallel to the first PFC circuit; and a control circuit configured to detect whether a load is connected to the electronic apparatus, and control the first PFC circuit at least by applying a first signal for controlling on and off of the first PFC circuit to a first switch included in the first PFC circuit and control the second PFC circuit at least by applying a second signal for controlling on and off of the second PFC circuit to a second switch included in the second PFC circuit, wherein if the load connection is not detected, the control circuit is configured to control each of the first and second PFC circuits to have an output voltage corresponding to a reference voltage, the reference voltage being less than an alternating current (AC) rectified voltage of the electronic apparatus.

According to an an example embodiment, there may be provided a control method of an electronic apparatus which includes a first power factor correction (PFC) circuit and a second PFC circuit, where the method may include: detecting whether a load is connected to the electronic apparatus; and controlling the first PFC circuit by applying a first signal for controlling on and off of the first PFC circuit to a first switch included in the first PFC circuit and controlling the second PFC circuit by applying a second signal for controlling on and off of the second PFC circuit to a second switch included in the second PFC circuit, based on whether the load is connected, wherein if the load connection is not detected, the controlling includes controlling each of the first and second PFC circuits to have an output voltage corresponding to a reference voltage, the reference voltage being less than an alternating current (AC) rectified voltage of the electronic apparatus.

According to an an example embodiment, there may be provided a computer-readable recording medium including a program for executing a control method of an electronic apparatus which includes a first power factor correction (PFC) circuit and a second PFC circuit, wherein the method may include detecting whether a load is connected to the electronic apparatus, and controlling the first PFC circuit by applying a first signal for controlling on and off of the first PFC circuit to a first switch included in the first PFC circuit and controlling the second PFC circuit by applying a second signal for controlling on and off of the second PFC circuit to a second switch included in the second PFC circuit, based on whether the load is connected, wherein if the load connection is not detected, the controlling includes controlling each of the first and second PFC circuits to have an output voltage corresponding to a reference voltage, the reference voltage being less than an alternating current (AC) rectified voltage of the electronic apparatus.

### [Brief Description of Drawings]

FIG. 1 is a circuit diagram illustrating a burst mode of a power factor correction (PFC) circuit according to the prior art.
FIG. 2 is a block diagram illustrating a configuration of an electronic apparatus according to an an example embodiment.
FIG. 3 is a circuit diagram illustrating the electronic apparatus including a first PFC circuit and a second PFC circuit according to an an example embodiment.
FIG. 4 is a graph illustrating the burst mode and output voltage of the PFC circuit according to the prior art.
FIG. 5 is a graph illustrating the off state and output voltage of a PFC circuit according to an an example embodiment.
FIG. 6 is a graph illustrating a change in a switching signal if the PFC circuit is turned off according to an an example embodiment.
FIG. 7 is a graph illustrating a control circuit that applies the signal to either the first PFC circuit or the second PFC circuit according to an an example embodiment.
FIG. 8 is a diagram illustrating the electronic apparatus including a plurality of PFC circuits according to an an example embodiment.
FIG. 9 is a flowchart illustrating a control method of an electronic apparatus according to an an example embodiment.

### DETAILED DESCRIPTION

Terms used in the specification are briefly described, and the present disclosure is then described in detail.

General terms that are currently widely used are selected as terms used in embodiments of the present disclosure in consideration of their functions in the present disclosure, and may be changed based on the intention of those skilled in the art or a judicial precedent, the emergence of a new technique, or the like. In addition, in a specific case, terms arbitrarily chosen by an applicant may exist. In this case, the meanings of such terms are mentioned in detail in corresponding descriptions of the present disclosure. Therefore, the terms used in the present disclosure need to be defined on the basis of the meanings of the terms and the contents throughout the present disclosure rather than simple names of the terms.

The present disclosure may be variously modified and have several embodiments, and specific embodiments of the present disclosure are thus illustrated in the accompanying drawings and described in detail in the detailed description. However, it should be understood that the present disclosure is not limited to specific embodiments, and includes all modifications, equivalents, and substitutions, included in the disclosed spirit and scope of the present disclosure. If it is determined that a detailed description of any known art related to the embodiments may obscure the gist of the present disclosure, the detailed description will be omitted.

Terms such as "first" and "second" may be used to describe various components. However, the components are not to be construed as being limited by these terms. The terms are used only to distinguish one component from another.

A term of a singular number may include its plural number unless explicitly indicated otherwise in the context. It should be understood that a term such as "include" or "have" used in this application specifies the presence of features, numerals, steps, operations, components, parts, or combinations thereof, which are mentioned in the specification, and does not preclude the presence or addition of one or more other features, numerals, steps, operations, components, parts, or combinations thereof.

In the present disclosure, a "module" or a "~er/~or" may perform at least one function or operation, and be implemented by hardware, software, or a combination of hardware and software. In addition, a plurality of "modules" or a plurality of "~ers/~ors" may be integrated into at least one module and be implemented by the processor (not shown) except for a "module" or a "~er/or" that needs to be implemented by a specific hardware.

Hereinafter, embodiments of the present disclosure are described in detail with reference to the accompanying drawings so that those skilled in the art to which the present disclosure pertains may easily practice the present disclosure. However, the present disclosure may be modified in various different forms, and is not limited to the embodiments provided herein. In addition, in the drawings, portions unrelated to the description are omitted to clearly describe the present disclosure, and similar portions are denoted by similar reference numerals throughout the specification.

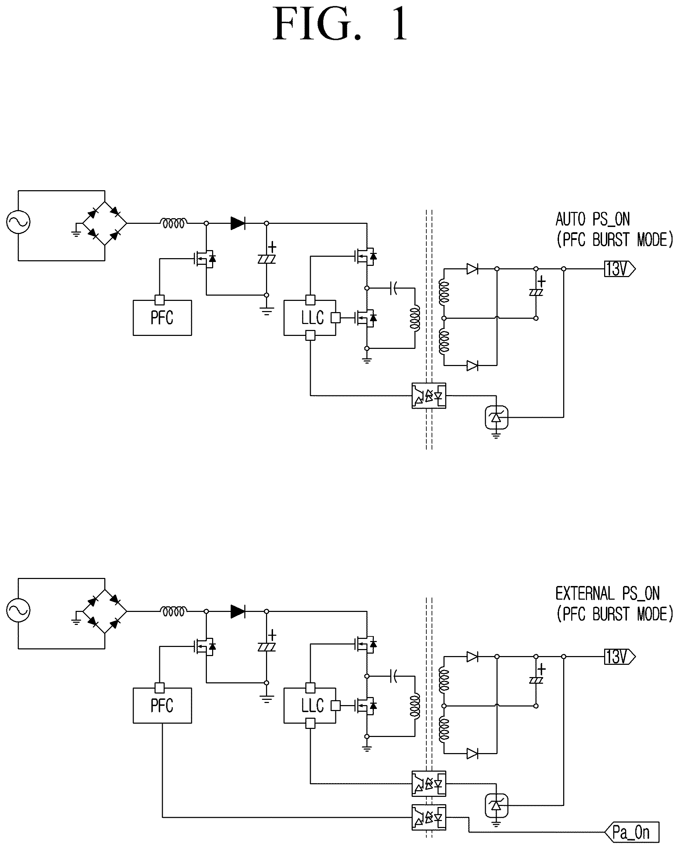

FIG. 1 is a circuit diagram illustrating a burst mode of a power factor correction (PFC) circuit according to the prior art.

Referring to FIG. 1, various types of electronic apparatuses (e.g., display devices) are required to output a large amount of power as a device size increases. For example, an electronic apparatus 100 according to the present disclosure may include a plurality of power factor correction (PFC) circuits to drive the electronic apparatus 100 or to supply power to a load (e.g., a peripheral device) connected to the electronic apparatus 100.

For example, if implemented as a switched mode power supply (SMPS), the electronic apparatus 100 may include a plurality of components to supply power thereto, and plurality of components may be classified into an alternating current (AC) to direct current (DC) block, a DC to DC block, or the like.

As shown in FIG. 1, it is difficult for a conventional electronic apparatus 100 to achieve slimness and satisfy a standby power standard (or regulation) while outputting a large amount of power. In particular, the conventional electronic apparatus that includes the plurality of PFC circuits to output a large amount of power is incapable of satisfying the standby power standard due to a switching signal (or a switching current) if each of the plurality of PFC circuits is operated in a burst mode.

The electronic apparatus 100 according to an an example embodiment may include the plurality of PFC circuits to output a large amount of power while satisfying the standby power standard. Hereinafter, a configuration of the electronic apparatus 100 for controlling the plurality of PFC circuits according to various embodiments of the present disclosure is described.

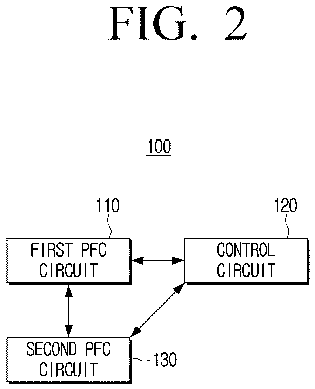

FIG. 2 is a block diagram illustrating the configuration of an electronic apparatus according to an an example embodiment.

The electronic apparatus 100 according to the various embodiments of the present disclosure may include a first power factor correction (PFC) circuit 110, a second PFC circuit 120, and a control circuit 130.

Here, the electronic apparatus 100 may receive an image signal by performing wired/wireless communication with an external device, such as a personal computer (PC) or a set-top box. The electronic apparatus 100 may also receive the image signal by using a tuner built in the electronic apparatus 100 itself, or obtain the image signal by using image data stored in a storage of the electronic apparatus 100. Next, the electronic apparatus 100 may provide the image signal to the external device (for example, the display device).

Meanwhile, the electronic apparatus 100 may include a power line connected to a power outlet providing commercial power (for example, 90 to 264 V), and transmit commercial power to the external device (or the load).

The electronic apparatus 100 according to an embodiment may be implemented as any of various types of devices for supplying power to the external device.

The external device may be implemented as the display device to display video data. Here, the display device may be implemented as a television (TV), is not limited thereto, and may be applied to any device having display functionality, such as a video wall, a large format display (LFD), a digital signage, a digital information display (DID), or a projector display. In addition, the display device may be implemented as any of various types of displays such as a liquid crystal display (LCD), an organic light emitting diode (OLED), a liquid crystal on silicon (LCoS), a digital light processing (DLP), a quantum dot (QD) display panel, a quantum dot light-emitting diode (QLED), a micro light-emitting diode (µLED), or a mini LED. In addition, the display device may display the image signal received from the electronic apparatus 100 and be driven using power supplied from the electronic apparatus 100.

The above-described example assumes that the electronic apparatus 100 and the external device are implemented separately. However, this configuration is only an example and the present disclosure is not limited thereto. The electronic apparatus 100 and the external device may be implemented as a single device. For example, the electronic apparatus 100 may be implemented as a component (for example, a power supply) of the external device.

The electronic apparatus 100 (e.g., the power supply) according to an an example embodiment may be implemented as a switched mode power supply (SMPS), and include a power factor correction circuit, i.e., a PFC circuit, to satisfy various regulations and increase an overall power consumption as a size of the electronic apparatus 100 increases.

According to an an example embodiment, the electronic apparatus 100 is a hardware that converts alternating current power into direct current power and stably supplies power to an internal load of the electronic apparatus 100 (or the external device). The electronic apparatus 100 may include a plurality of switches, and control on and off of each of the plurality of switches to provide stable power to the load.

Meanwhile, the electronic apparatus 100 according to an an example embodiment may also include a diode bridge (or a bridge rectifier), an electromagnetic interference (EMI) filter, or the like. For example, the diode bridge may refer to a bridge circuit that includes four diodes connected to one another, and may be a component that rectifies an AC input and changes the same into a DC output. "Connected" as used herein covers direct and indirect connections.

For example, the electronic apparatus 100 according to the present disclosure may include an active bridge instead of the diode bridge.

In an example, the active bridge may replace four diodes included in a conventional diode bridge having a transistor (e.g., a metal oxide semiconductor field effect transistor (MOSFET)). The active bridge may eliminate a forward conduction loss occurring in a rectifier diode, thereby increasing the efficiency of a converter (or power converter).

In addition, a controller (for example, an integrated circuit (IC) chip) for controlling the active bridge may have a very low power consumption, and a power consumption of the active bridge may be less than a power consumption of the diode bridge in a mode where the load is not connected to the electronic apparatus 100 (for example, in a standby mode).

An EMI filter unit may remove electrical noise from commercial power.

The electronic apparatus 100 according to an embodiment may include the first PFC circuit 110 and the second PFC circuit 120. Each of the first PFC circuit 110 and the second PFC circuit 120 may be implemented as various types of converters such as a buck converter, a boost converter, or a buck-boost converter.

Meanwhile, the electronic apparatus 100 may be operated in an intermittent switching mode to minimize the power consumption and satisfy the standby power standard (or regulation). The intermittent switching mode may also be referred to as a burst mode, the standby mode, or the like, and is hereinafter collectively referred to as the standby mode for convenience of description.

First, in the standby mode, the control circuit 130 of the electronic apparatus 100 may operate the first PFC circuit 110 and the second PFC circuit 120 in the standby mode if a magnitude of a current flowing through the first and second PFC circuits 110 and 120 is maintained at a threshold current or less.

Meanwhile, the electronic apparatus 100 may include the plurality of PFC circuits (for example, the first PFC circuit 110 and the second PFC circuit 120) to output a large amount of power. If the electronic apparatus 100 operates each of the plurality of PFC circuits in the standby mode, the electronic apparatus 100 may not satisfy the standby power standard due to an intermittent switching current.

For example, in the standby mode of the electronic apparatus 100, standby power of the electronic apparatus 100 may exceed reference power (e.g., 0.5 W) due to the switching signal applied to each of the plurality of PFC circuits.

The control circuit 130 according to an an example embodiment may control the electronic apparatus 100 by changing an output voltage of each of the plurality of PFC circuits, i.e., the AC to DC block, to minimize the loss due to the switching signal and to prevent standby power of the electronic apparatus 100 from exceeding reference power.

Meanwhile, the control circuit 130 may be implemented as a digital signal processor (DSP), a microprocessor, a timing controller (T-CON), which processes a digital image signal. However, the control circuit 130 is not limited thereto, and may include one or more of a central processing unit (CPU), a microcontroller unit (MCU), a micro processing unit (MPU), a converter (or the controller), an application control circuit (or an application processor (AP)), a communication control circuit (or a communication processor (CP)), an ARM control circuit, or may be defined by a relevant term. In addition, the control circuit 130 may be implemented as a system-on-chip (SoC) or a large scale integration (LSI), having a built-in processing algorithm, or may be implemented as a field programmable gate array (FPGA).

In addition, the control circuit 130 may be implemented as an integrated circuit (IC) included in each of the AC to DC block and the DC to DC block.

For example, the control circuit 130 may include a control circuit included in the active bridge and controlling the active bridge, a control circuit included in the first PFC circuit 110, a control circuit included in the second PFC circuit 120, and a control circuit included in the DC to DC block (for example, an inductor-inductor-capacitor (LLC) converter).

Hereinafter, the configuration of the electronic apparatus 100 for controlling the plurality of PFC circuits according to the various embodiments of the present disclosure is described with reference to a circuit diagram.

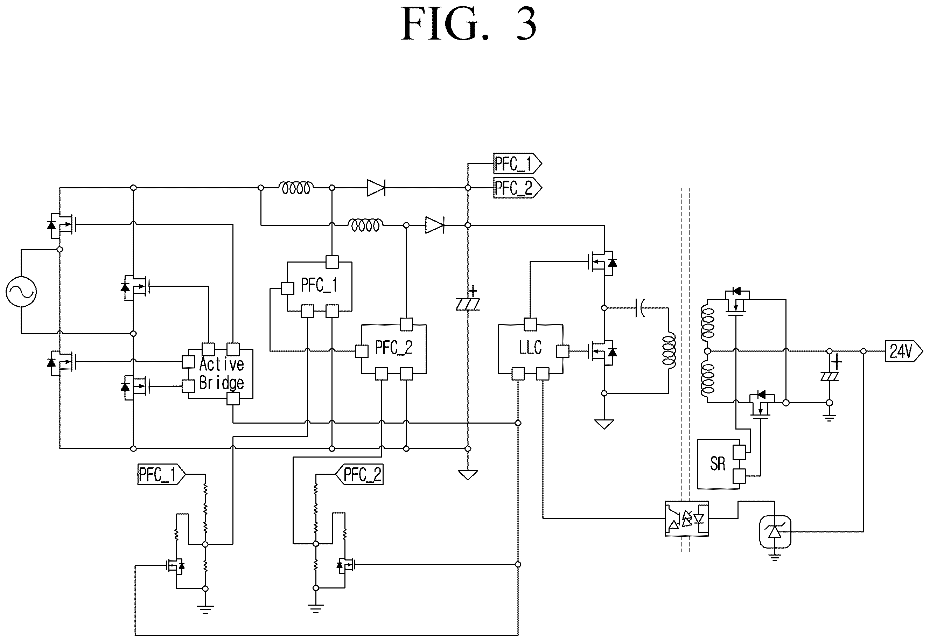

FIG. 3 is the circuit diagram illustrating the electronic apparatus including the first PFC circuit and the second PFC circuit according to an an example embodiment.

Referring to FIG. 3, the electronic apparatus 100 may include the first PFC circuit 110 and the second PFC circuit 120 connected in parallel to the first PFC circuit 110.

In an example, the control circuit 130 may detect whether the load is connected to the electronic apparatus 100 and apply a first signal for controlling on and off of the first PFC circuit 110 to a first switch included in the first PFC circuit, and apply a second signal for controlling on and off of the second PFC circuit 120 to a second switch included in the second PFC circuit.

<The first and second PFC circuits 110 and 120 in the standby mode>

If the load connection is not detected, the control circuit 130 may control each of the first and second PFC circuits 110 and 120 to have an output voltage corresponding to a reference voltage.

The control circuit 130 according to an an example embodiment may detect the output voltages of the first and second PFC circuits 110 and 120.

Next, the control circuit 130 may apply the first signal e.g., a gate signal) for controlling the on and off of the first switch included in the first PFC circuit 110 and the second signal for controlling the on and off of the second switch included in the second PFC circuit 120, if each of the output voltages of the first and second PFC circuits 110 and 120 is less than a set value (hereinafter, the reference voltage).

Here, the signal may include a signal supplied to a gate to cause the current to flow through the switch. Meanwhile, in the present disclosure, "a configuration for turning on the switch" refers to changing the switch from a non-conductive state to a conductive state. In particular, "the configuration for turning on the switch" refers to supplying the signal to the gate to cause the current to flow through the switch. On the other hand, "a configuration for turning off the switch" refers to changing the switch from the conductive state to the non-conductive state.

For example, if the control circuit 130 applies the signal to the first switch, the current flowing through an inductor included in the first PFC circuit 110 may increase, and the output voltage of the first PFC circuit 110 may also increase. In addition, if the control circuit 130 applies the signal to the second switch, the output voltage of the second PFC circuit 120 may also increase.

For example, the control circuit 130 may not apply the signal to the first switch if the output voltage of the first PFC circuit 110 increases and corresponds to (or reaches) the reference voltage. In addition, the control circuit 130 may not apply the signal to the second switch if the output voltage of the second PFC circuit 120 increases and corresponds to the reference voltage.

For example, the control circuit 130 according to an an example embodiment may change the reference voltage to be less than an AC rectified voltage if the load connection is not detected.

For example, in the electronic apparatus 100 according to the present disclosure, the output voltage of the first PFC circuit 110 may correspond to the AC rectified voltage while the load is not connected. Accordingly, the control circuit 130 may not apply the signal (for example, the first signal for turning on the first switch) to enable the output voltage of the first PFC circuit 110 to reach the AC rectified voltage.

For example, in the electronic apparatus 100 according to the present disclosure, the output voltage of the first PFC circuit 110 may be maintained at the AC rectified voltage if the load is not connected. Accordingly, the output voltage of the first PFC circuit 110 may not fall below the reference voltage (i.e., the output voltage of the first PFC circuit 110 may be maintained at the reference voltage or higher), and the control circuit 130 may not apply the signal to the first switch in the first PFC circuit 110.

Therefore, the switching signal for intermittently turning on the first switch included in the first PFC circuit 110 may not be generated.

The above-described example may be equally applied to the second PFC circuit 120. For example, the output voltage of the second PFC circuit 120 may be maintained at the AC rectified voltage if the load is not connected to the electronic apparatus 100. Accordingly, the output voltage of the second PFC circuit 120 may not fall below the reference voltage, and the control circuit 130 may not apply the signal to the second switch in the second PFC circuit 110.

Therefore, the switching signal for intermittently turning on the second switch included in the second PFC circuit 110 may not be generated.

The control circuit 130 according to an an example embodiment may control the electronic apparatus 100 to ensure standby power not exceeding reference power (e.g., 0.5 W) by changing the reference voltage to be less than the AC rectified voltage while the load is not connected, and maintaining the output voltage of each of the plurality of PFC circuits, i.e., the AC to DC block, at the AC rectified voltage, thereby minimizing the loss due to the switching signal.

Meanwhile, the standby mode of each of the first and second PFC circuits 110 and 120 may include a state in which the load connection to the electronic apparatus 100 is not detected, a state in which the magnitude of the current flowing through the first and second PFC circuits 110 and 120 is maintained at the threshold current or less.

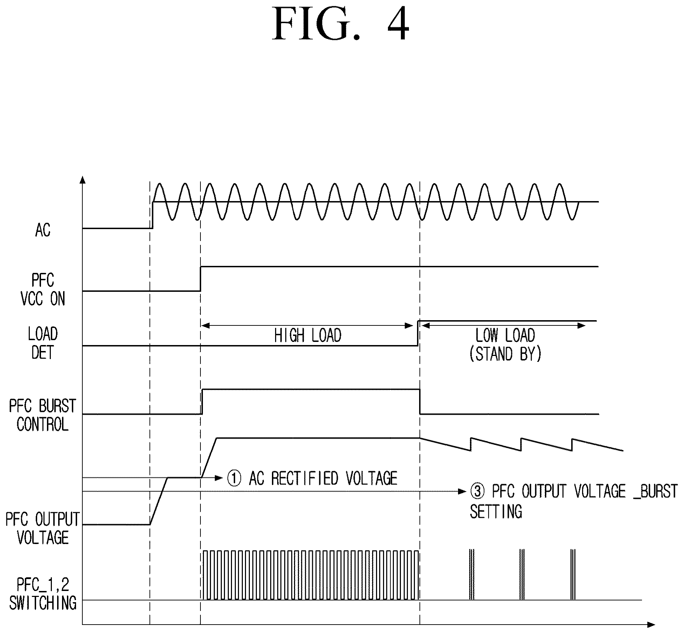

FIG. 4 is a graph illustrating the burst mode and output voltage of the PFC circuit according to the prior art.

Referring to FIG. 4, a graph illustrates a change in the output voltages of the first and second PFC circuits after AC power is applied to the electronic apparatus according to the prior art.

For example, the conventional electronic apparatus may operate the PFC circuit in the standby mode if the magnitude of the current flowing through the PFC circuits is maintained at the threshold current or less.

A control circuit included in the conventional electronic apparatus may generate the switching signal for intermittently turning on the switch included in the PFC circuit if the output voltage of the PFC circuit falls below the reference voltage and reaches a threshold voltage in the burst mode, i.e., in the standby mode of the PFC circuit.

If the switching signal is applied to the switch and the PFC circuit is turned on, the output voltage of the PFC circuit may increase and correspond to the reference voltage.

The control circuit may not apply the switching signal to the PFC circuit if the output voltage of the PFC circuit corresponds to the reference voltage.

However, if the conventional electronic apparatus includes the plurality of PFC circuits to output a large amount of power, and the switching signal is applied intermittently to each of the plurality of PFC circuits, standby power may exceed reference power (e.g., 0.5 W).

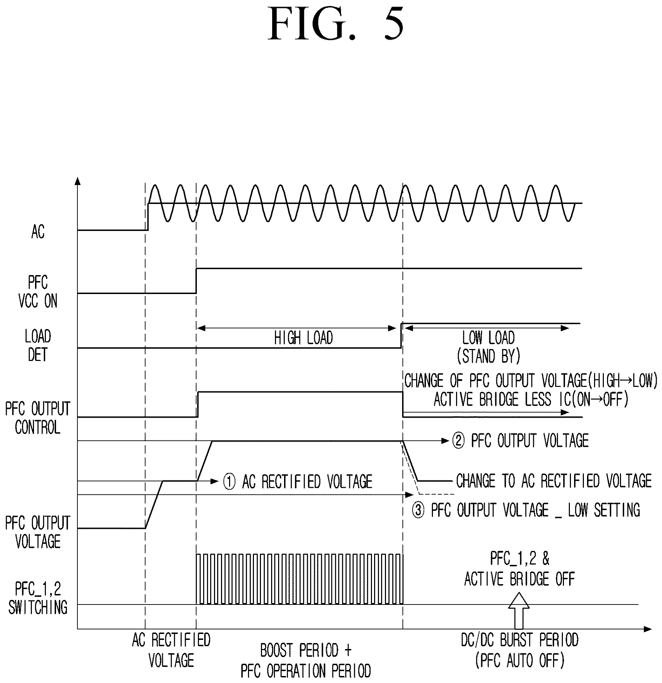

FIG. 5 is a graph illustrating the off state and output voltage of the PFC circuit according to an an example embodiment.

Referring to FIG. 5, if AC power is applied to the electronic apparatus 100 and the load connection is detected (e.g., a high load in FIG. 5), each of the first and second PFC circuits 110 and 120 may be operated in a boost mode, and the output voltage of each of the first and second PFC circuits 110 and 120 may reach a steady state, where each of the first and second PFC circuits 110 and 120 are maintained at a constant level.

For example, if the load connection is detected, the control circuit 130 may operate each of the first and second PFC circuits 110 and 120 in the boost mode by applying the first signal for turning on the first switch to the first switch and applying the second signal for turning on the second switch to the second switch.

Meanwhile, if the load connection is not detected (e.g., a low load in FIG. 5), the control circuit 130 may control each of the first and second PFC circuits 110 and 120 to have the output voltage corresponding to the reference voltage. Here, the reference voltage may be less than the AC rectified voltage.

For example, each if the output voltages of the first and second PFC circuits 110 and 120 may be maintained at the reference voltage or higher, the control circuit 130 may not apply the intermittent switching signal to the first and second PFC circuits 110 and 120, and standby power of the electronic apparatus 100 may not exceed the reference power (e.g., 0.5 W).

For example, the electronic apparatus 100 according to the present disclosure may include the DC to DC block (e.g., the LLC converter), and the LLC converter may be connected to the first and second PFC circuits 110 and 120, respectively.

For example, the control circuit 130 according to the present disclosure may not apply the switching signal to each of the first and second PFC circuits 110 and 120 (i.e., control each of the first and second PFC circuits 110 and 120 to be turned off) while the load connection is not detected, and the LLC converter may be operated in the intermittent switching mode (or the burst mode).

For example, the control circuit 130 according to the present disclosure may detect whether the load is connected based on a high or low signal from a load detection pin (Load Det). Here, the control circuit 130 may be a control circuit (for example, an IC chip) included in the LLC converter.

For example, the load detection pin may receive a detection signal (Det) from the active bridge included in each of the first and second PFC circuits 110 and 120. The load detection pin may detect that the load is connected if the detection signal is the high signal, and detect that the load is not connected if the detection signal is the low signal.

However, this configuration is only an example, and the load detection pin is not limited thereto.

For example, the electronic apparatus 100 according to the present disclosure may include an output unit connectable to the load and including a synchronous rectifier, and the control circuit 130 may detect whether the load is connected based on whether the synchronous rectifier included in the output section is in operation. For example, the output unit may also be referred to as a secondary circuit, and is hereinafter collectively referred to as the output unit for convenience of description. For example, the control circuit 130 may include a control circuit (e.g., an IC chip) included in the secondary circuit.

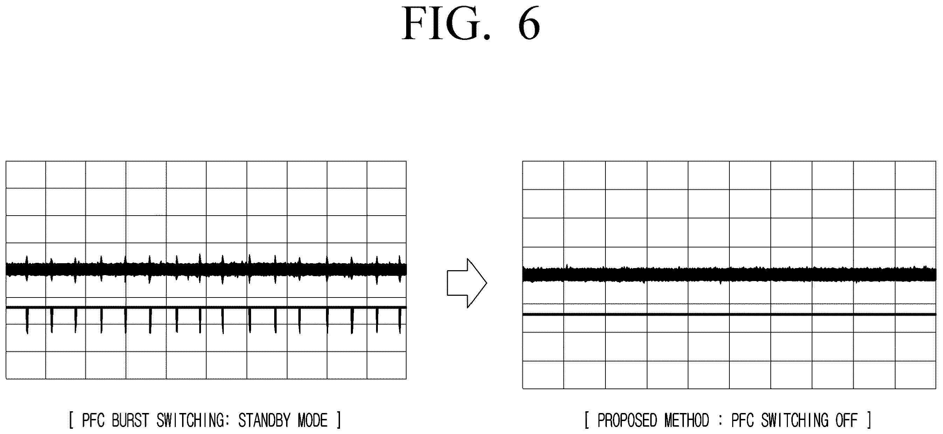

FIG. 6 is a graph illustrating a change in the switching signal if the PFC circuit is turned off according to an an example embodiment.

Referring to the left graph of FIG. 6, the conventional electronic apparatus may operate the plurality of PFC circuits in the burst mode, and thus apply the intermittent switching signal to each of the plurality of PFC circuits, which causes standby power of the electronic apparatus to exceed reference power in the burst mode.

However, referring to the right graph of FIG. 6, the electronic apparatus 100 may prevent an increase in standby power due to the intermittent switching signal by turning off each of the plurality of PFC circuits if the load is not connected.

For example, if the control circuit 130 sets the reference voltage to be less than the AC rectified voltage, the output voltages of the first and second PFC circuits 110 and 120 are maintained at the AC rectified voltage or higher without turning on the first switch included in the first PFC circuit 110 and the second switch included in the second PFC circuit 120, respectively. Accordingly, the first PFC circuit 110 and the second PFC circuit 120 may be automatically turned off.

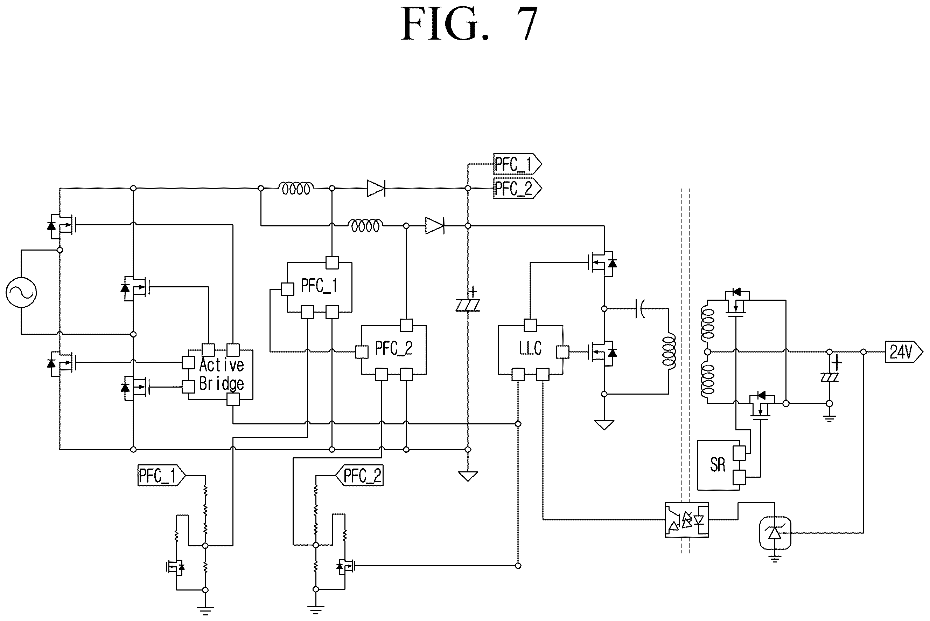

FIG. 7 is a graph illustrating the control circuit that applies the signal to either the first PFC circuit or the second PFC circuit according to an an example embodiment.

Referring to FIG. 7, if the load connection is not detected, the control circuit 130 may control the first PFC circuit 110 to have the output voltage corresponding to a first reference voltage, and control the second PFC circuit 120 to have the output voltage corresponding to a second reference voltage.

For example, if the load is not connected to the electronic apparatus 100, the control circuit 130 may apply the intermittent switching signal to the first PFC circuit 110 to operate the first PFC circuit 110 in the burst mode and automatically turn off the second PFC circuit 120.

For example, the electronic apparatus 100 may control the first PFC circuit 110 to have the output voltage corresponding to the first reference voltage if the load is not connected. Here, the first reference voltage may be the AC rectified voltage or higher and the output voltage of the first PFC circuit 110 or less in the boost mode (i.e., the AC rectified voltage minus the output voltage of the first PFC circuit 110 in the boost mode).

For example, the control circuit 130 may generate the switching signal for intermittently turning on the first switch in the first PFC circuit 110 if the output voltage of the first PFC circuit 110 reaches the threshold voltage. The control circuit 130 may control the first PFC circuit 110 by applying the switching signal for intermittently turning on the first PFC circuit 110 to the first switch to have the output voltage corresponding to the reference voltage.

Meanwhile, the electronic apparatus 100 may control the second PFC circuit 120 to have the output voltage corresponding to the second reference voltage if the load is not connected. Here, the second reference voltage may be the AC rectified voltage or less.

For example, the control circuit 130 may not generate the switching signal for intermittently turning on the second switch in the second PFC circuit 120 because the output voltage of the second PFC circuit 120 may be maintained at the reference voltage or higher, i.e., the AC rectified voltage or higher.

For example, the control circuit 130 may not generate the switching signal corresponding to each of the plurality of PFC circuits, and may generate the switching signal corresponding to at least one of the plurality of PFC circuits. For example, the control circuit 130 may generate the switching signal corresponding to the first PFC circuit 110, and may not generate the switching signal corresponding to the second PFC circuit 120.

For example, the control circuit 130 may generate the switching signal corresponding to at least one of the plurality of PFC circuits, and may not generate the switching signal corresponding to the remaining PFC circuits. Therefore, in the standby mode (i.e., while the load is not connected to the electronic apparatus 100), standby power of the electronic apparatus 100 due to the switching signal applied to at least one PFC circuit may not exceed reference power (e.g., 0.5 W).

In the above-described example, for convenience of description, it is assumed that the electronic apparatus 100 includes the first and second PFC circuits 110 and 120. However, the electronic apparatus 100 may include the plurality of PFC circuits.

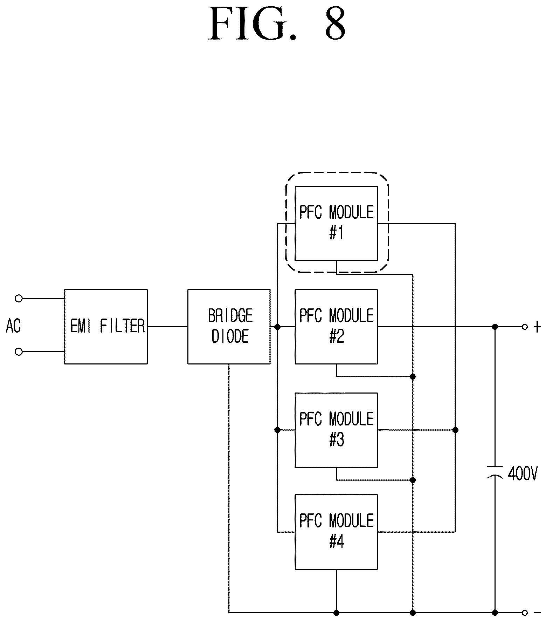

FIG. 8 is a diagram illustrating the electronic apparatus including the plurality of PFC circuits according to an an example embodiment.

Referring to FIG. 8, the electronic apparatus 100 may include first to fourth PFC circuits connected in parallel to one another.

For example, the electronic apparatus 100 may include the plurality of PFC circuits to output a large amount of power, and the plurality of FPC circuits may be connected in parallel to one another.

For example, if the load is connected to the electronic apparatus 100 and the electronic apparatus 100 outputs 600 W of power, each of the first to fourth PFC circuits may output 150 W.

For example, if the load is not connected to the electronic apparatus 100, the control circuit 130 may operate at least one of the first to fourth PFC circuits (e.g., the first PFC circuit 110) in the burst mode and apply the intermittent switching signal to the first switch included in the first PFC circuit 110.

For example, the control circuit 130 may control the remaining PFC circuits (e.g., the second to fourth PFC circuits) to have their output voltages corresponding to the reference voltage which is equal to or less than the AC rectified voltage. The control circuit 130 may not apply the intermittent switching signal to the remaining PFC circuits. Therefore, the remaining PFC circuits may be automatically turned off.

For example, the first to fourth PFC circuits may be connected in parallel to one another. Accordingly, the output voltage of the first PFC circuit 110 may be equal to the output voltage of each of the remaining PFC circuits (i.e., the second to fourth PFC circuits) while the load connection is not detected.

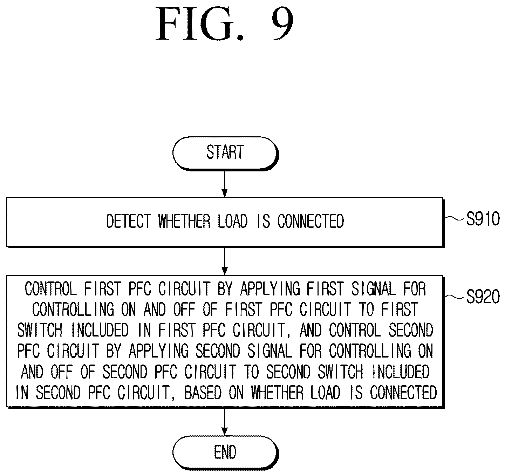

FIG. 9 is a flowchart illustrating a control method of an electronic apparatus according to an an example embodiment.

According to an an example embodiment, a control method of an electronic apparatus which includes the first power factor correction (PFC) circuit and the second PFC circuit may include detecting whether the load is connected to the electronic apparatus (S910).

The control method may include controlling the first PFC circuit by applying the first signal for controlling the on and off of the first PFC circuit to the first switch included in the first PFC circuit and controlling the second PFC circuit by applying the second signal for controlling the on and off of the second PFC circuit to the second switch included in the second PFC circuit, based on whether the load is connected (S920).

According to an embodiment, if the load connection is not detected, the controlling (S920) may include controlling each of the first and second PFC circuits to have the output voltage corresponding to the reference voltage. The reference voltage may be less than the AC rectified voltage of the electronic apparatus.

The electronic apparatus according to an an example embodiment may further include the LLC converter connected to the first and second PFC circuits, and the controlling (S920) may include controlling the first and second PFC circuits to be turned off and the LLC converter to be operated in the burst mode while the load connection is not detected.

The electronic apparatus according to an an example embodiment may further include the LLC converter connected to the first and second PFC circuits, and the bridge, and the detecting (S910) may include detecting whether the load is connected based on the detection signal (DET) received by the LLC converter from the bridge.

The bridge according to an an example embodiment may include the active bridge including the plurality of transistors (field-effect transistors (FETs)) and the IC for controlling each of the plurality of transistors, the detecting (S910) may include receiving the detection signal by the LLC converter from the IC, and the controlling (S920) may include controlling each of the first and second PFC circuits to have the output voltage corresponding to the reference voltage if the load connection is not detected based on the detection signal.

According to an an example embodiment, the controlling (S920) may include applying the first signal for turning off the first switch to the first switch and applying the second signal for turning off the second switch to the second switch, if the output voltage of each of the first and second PFC circuits is higher than or equal to the reference voltage. The output voltage of each of the first and second PFC circuits may be higher than or equal to the AC rectified voltage while each of the first and second PFC circuits is turned off.

The electronic apparatus according to an an example embodiment may further include the output unit connectable to the load and including the synchronous rectifier, and the detecting (S910) may include detecting whether the load is connected based on whether the synchronous rectifier is in operation.

The controlling (S920) according to an an example embodiment may include operating the first and second PFC circuits in boost the mode by applying the first signal for turning on the first switch to the first switch and the second signal for turning on the second switch to the second switch, respectively, if the load connection is detected.

If the load connection is not detected, the controlling (S920) according to an an example embodiment may include controlling the first PFC circuit to have the output voltage corresponding to the first reference voltage, and controlling the second PFC circuit to have the output voltage corresponding to the second reference voltage. Here, the first reference voltage may be higher than or equal to the AC rectified voltage, and the second reference voltage may be less than the AC rectified voltage.

The controlling (S920) according to an an example embodiment may include operating the first PFC circuit in the burst mode and controlling the second PFC circuit to be turned off while the load connection is not detected.

The electronic apparatus according to an an example embodiment may further include the third PFC circuit connected in parallel to each of the first and second PFC circuits. If the load connection is not detected, the controlling (S920) may include controlling the third PFC circuit to have the output voltage corresponding to a third reference voltage. Here, the third reference voltage may be less than the AC rectified voltage.

However, the various embodiments of the present disclosure may be applied not only to the electronic apparatus, but also to all types of electronic apparatuses including the SMPS.

Meanwhile, the various embodiments described above may be implemented in a computer-readable recording medium or a device similar thereto that uses software, hardware, or a combination of software and hardware. In some cases, the embodiments described in the specification may be implemented by a processor itself. According to software implementation, the embodiments such as the procedures and functions described in the specification may be implemented by separate software modules. Each of the software modules may perform at least one function or operation described in the specification.

Meanwhile, computer instructions for performing processing operations of the electronic apparatus 100 according to the various an example embodiment described above may be stored in a non-transitory computer-readable recording medium. The computer instructions stored in the non-transitory computer-readable recording medium may allow a specific device to perform the processing operations of the electronic apparatus 100 according to the various embodiments described above in case that the computer instructions are executed by a processor of the specific device.

The non-transitory computer-readable recording medium is not a medium that temporarily stores data, such as a register, a cache, or a memory, and indicates a medium that semi-permanently stores data and is readable by the device. A specific example of the non-transitory computer-readable recording medium may include a compact disk (CD), a digital versatile disk (DVD), a hard disk, a Blu-ray disk, a universal serial bus (USB), a memory card, a read-only memory (ROM), or the like.

Although the embodiments of the present disclosure have been shown and described hereinabove, the present disclosure is not limited to the above-mentioned specific embodiments, and may be variously modified by those skilled in the art to which the present disclosure pertains without departing from the scope and spirit of the present disclosure as disclosed in the accompanying claims. These modifications should also be understood to fall within the scope and spirit of the present disclosure.

## Claims

1. An electronic apparatus comprising:
a first power factor correction (PFC) circuit;
a second PFC circuit connected in parallel to the first PFC circuit; and
a control circuit configured to:
detect whether a load is connected to the electronic apparatus, and
control the first PFC circuit by applying a first signal for controlling on and off of the first PFC circuit to a first switch included in the first PFC circuit and control the second PFC circuit by applying a second signal for controlling on and off of the second PFC circuit to a second switch included in the second PFC circuit,
wherein the control circuit is configured to control each of the first and second PFC circuits to have an output voltage corresponding to a reference voltage based on the load connection not being detected,
wherein the reference voltage is less than an alternating current (AC) rectified voltage of the electronic apparatus.

2. The device as claimed in claim 1, further comprising an inductor-inductor-capacitor (LLC) converter connected to the first and second PFC circuits,
wherein the control circuit is configured to control the first and second PFC circuits to be turned off and the LLC converter to be operated in a burst mode based on the load connection not being detected.

3. The device as claimed in claim 1, further comprising:
an inductor-inductor-capacitor (LLC) converter connected to the first and second PFC circuits; and
a bridge connected in parallel to each of the first and second PFC circuits,
wherein the control circuit is configured to detect whether the load is connected based on a detection signal (DET) received by the LLC converter from the bridge.

4. The device as claimed in claim 3, wherein the bridge includes an active bridge including a plurality of transistors and an integrated circuit (IC) configured for controlling each of the plurality of transistors,
the LLC converter is configured to receive the detection signal from the IC, and
the control circuit is configured to control each of the first and second PFC circuits to have the output voltage corresponding to the reference voltage when the load connection is not detected based on the detection signal.

5. The device as claimed in claim 4, wherein the control circuit is configured to apply the first signal for turning off the first switch to the first switch and apply the second signal for turning off the second switch to the second switch, when the output voltage of each of the first and second PFC circuits is higher than or equal to the reference voltage,
the output voltage of each of the first and second PFC circuits being higher than or equal to the AC rectified voltage while each of the first and second PFC circuits is turned off.

6. The device as claimed in claim 1, further comprising an output unit configured to be connectable to the load and including a synchronous rectifier,
wherein the control circuit is configured to detect whether the load is connected based on whether the synchronous rectifier is in operation.

7. The device as claimed in claim 1, wherein the control circuit is configured to operate each of the first and second PFC circuits in a boost mode, based on the load connection being detected, at least by applying the first signal for turning on the first switch to the first switch and applying the second signal for turning on the second switch to the second switch, respectively.

8. The device as claimed in claim 1, wherein, based on the load connection not being detected, the control circuit is configured to:
control the first PFC circuit to have the output voltage corresponding to a first reference voltage, and
control the second PFC circuit to have the output voltage corresponding to a second reference voltage,
the first reference voltage being higher than or equal to the AC rectified voltage, and
the second reference voltage being less than the AC rectified voltage.

9. The device as claimed in claim 8, wherein the control circuit is configured to:
operate the first PFC circuit in a burst mode, and
control the second PFC circuit to be turned off, while the load connection is not detected.

10. The device as claimed in claim 8, further comprising a third PFC circuit connected in parallel to each of the first and second PFC circuits,
wherein the control circuit is configured to control the third PFC circuit to have an output voltage corresponding to a third reference voltage, based on the load connection not being detected,
the third reference voltage being less than the AC rectified voltage.

11. A control method of an electronic apparatus comprising a first power factor correction (PFC) circuit and a second PFC circuit, the method comprising:
detecting whether a load is connected to the electronic apparatus; and
controlling the first PFC circuit by applying a first signal for controlling on and off of the first PFC circuit to a first switch included in the first PFC circuit and controlling the second PFC circuit by applying a second signal for controlling on and off of the second PFC circuit to a second switch included in the second PFC circuit, based on whether the load is connected,
wherein the controlling includes controlling each of the first and second PFC circuits to have an output voltage corresponding to a reference voltage based on the load connection not being detected,
the reference voltage being less than an alternating current (AC) rectified voltage of the electronic apparatus.

12. The method as claimed in claim 11, wherein the electronic apparatus further includes an inductor-inductor-capacitor (LLC) converter connected to the first and second PFC circuits,
wherein the controlling includes controlling the first and second PFC circuits to be turned off and the LLC converter to be operated in a burst mode while the load connection is not detected.

13. The method as claimed in claim 11, wherein the electronic apparatus further includes an inductor-inductor-capacitor (LLC) converter and a bridge, each connected to the first and second PFC circuits,
wherein the detecting includes detecting whether the load is connected based on a detection signal (DET) received by the LLC converter from the bridge.

14. The method as claimed in claim 13, wherein the bridge includes an active bridge including a plurality of transistors and an integrated circuit (IC) controlling each of the plurality of transistors,
wherein the detecting includes receiving the detection signal by the LLC converter from the IC, and
the controlling includes controlling each of the first and second PFC circuits to have the output voltage corresponding to the reference voltage when the load connection is not detected based on the detection signal.

15. The method as claimed in claim 14, wherein the controlling includes applying the first signal for turning off the first switch to the first switch and applying the second signal for turning off the second switch to the second switch, when the output voltage of each of the first and second PFC circuits is higher than or equal to the reference voltage,
the output voltage of each of the first and second PFC circuits being higher than or equal to the AC rectified voltage while each of the first and second PFC circuits is turned off.
